# FASCICULE DE BREVET EUROPEEN

(11) **EP 2 616 285 B1**
(45) Date de publication et mention de la délivrance du brevet: **01.04.2015**
(21) Numéro de dépôt: 11761666.4
(22) Date de dépôt: 24.08.2011
(51) Int. Cl.: B60R 21/34, B62D 25/10

(54) **VÉHICULE CONÇU POUR MINIMISER UN CHOC PIÉTON**
FAHRZEUG ZUR ABDÄMPFUNG EINES FUSSGÄNGERAUFPRALLS
VEHICLE ADAPTED FOR ABSORBING COLLISION WITH A PEDESTRIAN

(30) Priorité: 16.09.2010 FR 1057391
(43) Date de publication de la demande: 24.07.2013
(73) Titulaire: Peugeot Citroën Automobiles SA, 78140 Vélizy Villacoublay (FR)
(72) Inventeur: BENANE, Said, F-94550 Chevilly Larue (FR); BREFORT, Laurent, 78330 Fontenay le Fleury (FR)
(74) Mandataire: Fosse, Danièle
(86) Numéro de dépôt international: PCT/FR2011/051962
(87) Numéro de publication internationale: WO 2012/035229

(56) Documents cités:
- EP-A2- 1 527 984
- DE-A1-102005 016 325
- FR-A1- 2 833 222
- US-A1- 2002 003 054

## Description

Le domaine technique de l'invention concerne le milieu de l'industrie automobile, et, plus particulièrement, les véhicules automobiles dimensionnés vis-à-vis d'un choc piéton, notamment pour minimiser les dommages corporels lors d'un impact accidentel avec un piéton. En effet, les véhicules sont non seulement conçus pour assurer un niveau de protection maximum pour les occupants, par l'incorporation de coussins gonflants ou l'utilisation de matériau amortissant, voire de dispositifs sécables, mais également pour assurer un bon niveau de sécurité vis-à-vis des piétons, en tendant à diminuer les effets engendrés sur ceux-ci, suite à une collision accidentelle. L'invention se rapporte à un véhicule automobile ayant subi un aménagement ponctuel pour réduire les dommages corporels d'un piéton.

Les véhicules automobiles, dont le capot avant est spécialement aménagé pour minimiser l'intensité d'un choc piéton existent et ont déjà fait l'objet de brevets. On peut, par exemple, citer les brevets EP1258417 et DE 10232799, qui se rapportent à des véhicules automobiles dotés de capots spécialement étudiés pour amortir un choc piéton. Plus précisément, c'est la jointure entre le capot et l'aile, qui est dimensionnée pour se déformer sous l'effet de l'impact de la tête d'un piéton, afin d'amortir le choc produit sur le piéton par ledit impact.

En réalité, il existe une multiplicité de solutions prévues pour amortir un choc piéton en partie avant de véhicule automobile. Le capot peut, par exemple, être constitué de matériaux amortissant au niveau de ses articulations, ou peut être volontairement positionné à une distance seuil minimale des objets durs qu'il coiffe, comme par exemple un moteur ou un radiateur, afin qu'il puisse se déformer sans contrainte, ou être actif, en étant muni d'un dispositif de soulèvement au niveau de sa charnière arrière, déclenché juste avant l'impact comme décrit dans FR2833222 qui décrit l'état de la technique plus proche. D'autres solutions existent, portant par exemple, sur des systèmes de fixations d'objets sous le capot, dimensionnés pour se déformer ou se rompre prématurément lors d'un choc avec un piéton. Or, malgré toutes ces mesures sécuritaires, il apparait, de façon récurrente, que l'aile d'un véhicule automobile constitue un point dur pouvant s'avérer dangereux pour la tête d'un piéton, qui pivote suite à un choc accidentel, et que peu d'aménagements ont été réalisés au niveau de l'aile pour la rendre moins dangereuse. Une première solution peut consister à réaménager l'aile pour lui conférer un caractère déformable, afin qu'elle ne constitue plus une zone dangereuse en cas d'impact. Une deuxième solution peut prévoir de privilégier une direction de projection de la tête juste après l'impact sur le capot, qui l'éloigne de l'aile, en modifiant l'environnement immédiat de l'aile sur le véhicule automobile. L'invention se focalise sur les véhicules répondant à cette deuxième catégorie de solution. Plus spécifiquement, les véhicules automobiles selon l'invention, sont dotés d'une doublure de capot, dont les zones adjacentes aux deux ailes, présentent un relief particulier, destiné à privilégier une direction de déplacement de la tête, qui l'écarte de l'aile.

La présente invention a pour objet un véhicule automobile comprenant un capot avant bordé par deux ailes, ledit capot étant muni d'une doublure venant au contact desdites ailes. Les zones latérales de ladite doublure venant au contact des ailes, présentent chacune une inclinaison orientée longitudinalement par rapport au véhicule. Bien souvent, un piéton percuté accidentellement par la partie avant d'un véhicule, est amené à pivoter, sa tête ayant notamment tendance à venir impacter les bordures latérales et longitudinales du capot, avec un risque non négligeable de renvoi vers l'aile constituant un point dur et rigide, pouvant s'avérer dangereux. L'inclinaison des parties latérales de la doublure de capot, a pour but de privilégier une direction de déplacement de la tête, selon une direction longitudinale du véhicule, annihilant toute possibilité pour celle-ci de rebondir latéralement vers l'aile, évitant ainsi d'aggraver des dommages corporels potentiels. De cette manière la tête peut être projetée, soit vers l'avant du véhicule, soit vers l'arrière, mais aucunement vers l'aile. Cette inclinaison peut être effective, soit sur toute la longueur de la doublure de capot, soit sur une partie seulement de cette longueur.

Selon l'invention chaque zone latérale de la doublure est surélevée par rapport à chacune des deux ailes. De cette manière, la tête arrivant généralement par le dessus du capot, va d'abord impacter celui-ci au niveau d'une zone latérale présentant l'inclinaison, puis va être projetée selon une direction longitudinale du véhicule, sans possibilité de venir impacter l'aile.

De façon préférentielle, chaque inclinaison s'étend vers l'avant et vers le bas du véhicule. Pour cette configuration, la tête va avoir tendance à se déplacer vers l'avant du véhicule, après avoir percuté la zone inclinée de la doublure de capot. Un déplacement vers l'arrière n'est pas toujours recommandé, car le pare-brise pourrait alors constituer un obstacle tout aussi dangereux que l'aile.

De façon avantageuse, les zones latérales présentant une inclinaison sont situées chacune en partie arrière de doublure. En effet, la tête du piéton percuté, vient souvent heurter la zone latérale du capot, située juste à l'avant du pare-brise.

Selon un mode de réalisation préféré d'un véhicule selon l'invention, la doublure de capot comporte deux rampes latérales et longitudinales présentant une inclinaison. Le terme rampe désigne une protubérance saillant de la doublure de capot, lesdites rampes pouvant être réalisées en une seule pièce avec la doublure de capot, ou bien pouvant constituer des pièces rapportées.

Selon un autre mode de réalisation préféré d'un véhicule selon l'invention, l'inclinaison est progressive et monotone. Autrement dit, les parties latérales et inclinées de la doublure, sont lisses, et leur pente varie continument le long d'un axe longitudinal du véhicule.

Selon un autre mode de réalisation préféré d'un véhicule selon l'invention, les zones latérales de la doublure de capot présentent chacune, selon une direction longitudinale du véhicule, une succession de marches, dont la hauteur varie de façon progressive et monotone. Autrement dit, les zones latérales et inclinées de la doublure de capot, présentent une succession de paliers, dont la variation de hauteur définit l'inclinaison.

Préférentiellement, la marche la plus haute est située à la partie arrière de chaque zone latérale de la doublure, et la marche la plus basse est située à sa partie avant. Pour cette configuration, l'inclinaison s'étend vers l'avant et vers le bas du véhicule, privilégiant une projection de la tête vers l'avant dudit véhicule.

Avantageusement, les zones latérales de la doublure de capot présentent chacune, selon une direction longitudinale du véhicule, une succession de trois marches. Il s'agit d'un cas particulier optimisé, permettant de répondre au problème posé avec une grande efficacité, tout en demeurant faciles à fabriquer.

Selon un autre mode de réalisation préféré d'un véhicule selon l'invention, chaque marche présente une face supérieure penchée vers l'avant et vers le bas du véhicule. Pour cette configuration particulière, l'inclinaison de la face supérieure de chaque marche va s'additionner à l'inclinaison générale de la zone latérale de la doublure de capot, pour favoriser, davantage encore, la projection de la tête vers l'avant du véhicule.

Les véhicules selon l'invention, présentent l'avantage d'être dotés d'un moyen supplémentaire, facile à fabriquer et peu encombrant, permettant de minimiser l'intensité des blessures au niveau de la tête d'un piéton, qui percuterait accidentellement la partie avant d'un véhicule. Ils ont, de plus, l'avantage de pouvoir décliner ce moyen supplémentaire sous une pluralité de forme, de géométrie et de taille, pour pouvoir l'adapter à une grande diversité de véhicules.

On donne ci-après une description détaillée d'un mode de réalisation préféré d'un véhicule selon l'invention, en se référant aux figures 1 à 4.
- La figure 1 est une vue du dessus de la partie avant d'un véhicule automobile, montrant notamment le capot.
- La figure 2 est la vue de la figure 1, mais sans le capot, laissant notamment apparaitre la doublure de capot
- La figure 3 est une vue simplifiée et en perspective, du positionnement d'une zone latérale et inclinée d'une doublure de capot d'un véhicule selon l'invention, par rapport à l'aile.
- La figure 4, est une vue en perspective d'une zone latérale et inclinée d'une doublure de capot d'un véhicule selon l'invention.

Pour bien comprendre les dessins, il est utile de préciser que l'axe X est un axe longitudinal du véhicule, l'axe Y est un axe transversal de ce véhicule, et que l'axe Z est un axe vertical.

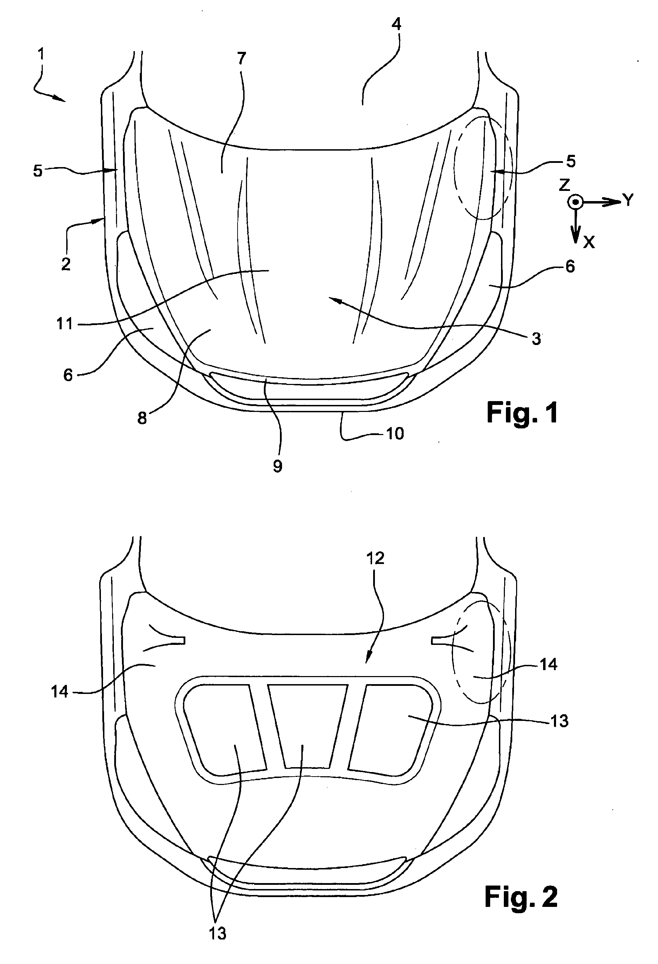

En se référant à la figure 1, la partie avant 2 d'un véhicule 1 selon l'invention, comprend un capot 3, entouré à sa partie arrière par un pare-brise 4, et latéralement par deux ailes 5 et deux projecteurs 6, lesdits projecteurs 6 étant situés au niveau de la partie avant desdites ailes 5. Le capot 3 présente une partie arrière 7 de largeur constante, prolongée par une partie avant 8 se rétrécissant progressivement, pour permettre l'insertion des deux projecteurs 6, le bord transversal 9 de ladite partie avant 8 du capot 3, venant en appui contre le pare-choc 10. Le capot 3 se compose d'une peau extérieure 11, qui est l'élément visible depuis l'extérieur du véhicule, et d'une doublure 12.

En se référant à la figure 2, la doublure 12 du capot 3 possède globalement le même contour que celui de la peau extérieure 11, et comporte trois ouvertures centrales 13. Cette doublure 12 possède deux zones latérales 14 venant en correspondance avec les deux zones latérales de la partie arrière 7 de la peau extérieure 11, de largeur constante.

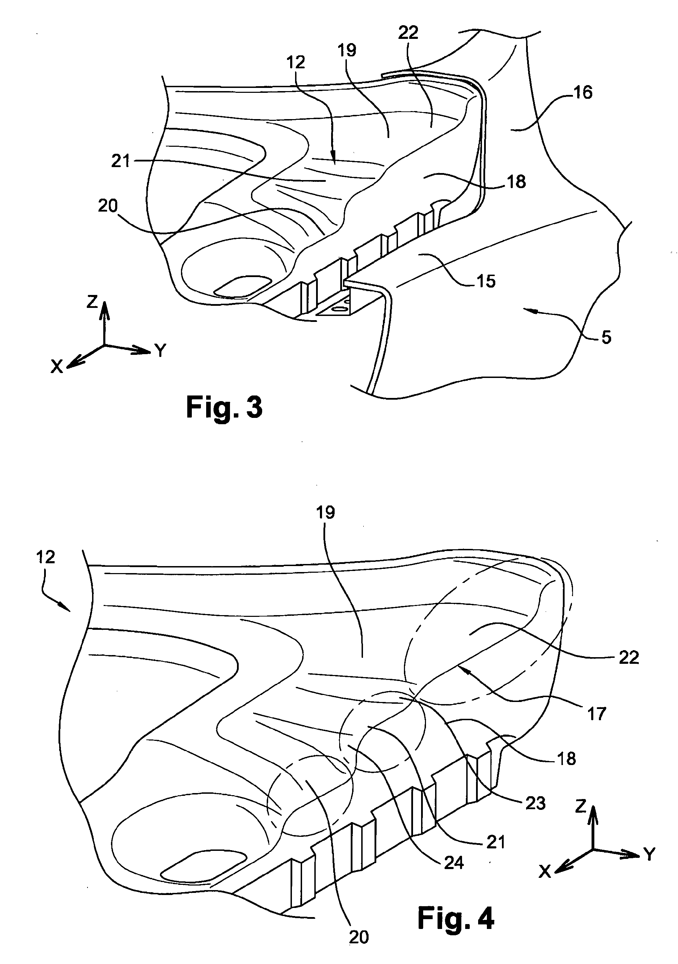

En se référant à la figure 3, la partie supérieure de chaque aile 5, se compose d'une partie avant 15 et d'une partie arrière 16 surélevée, ayant sensiblement une section en forme de L, la doublure 12 du capot 3 étant positionnée par rapport à l'aile 5, de telle sorte que les zones latérales 14 de ladite doublure 12 surmontent la partie avant 15 de la partie supérieure de chaque aile 5, et prolongent approximativement vers l'avant, les parties arrières 16 surélevées de ladite partie supérieure.

En se référant à la figure 4, chacune des parties latérales 14 de la doublure 12 de capot 3, présente un bord longitudinal 17 délimitant latéralement ladite doublure 12, ledit bord 17 comprenant une face sensiblement verticale 18 et une face sensiblement horizontale 19, raccordée à ladite face verticale 18. La face horizontale 19 de ce bord 17, comporte trois marches 20,21,22 se succédant suivant un axe longitudinal du véhicule, la marche 22 la plus haute se situant à la partie arrière du bord longitudinal, la marche la plus basse 20 étant placée à l'avant dudit bord 17, et la marche 21de hauteur intermédiaire étant intercalée entre les deux. Chaque épaulement 23,24 crée entre deux marches successives 20,21,22 s'étend selon une direction transversale du véhicule, et est incliné vers l'avant et vers le bas dudit véhicule. La face supérieure de chaque marche 20,21,22 est sensiblement horizontale. De cette manière, les zones latérales 14 de la doublure 12 de capot 3, présente une inclinaison vers l'avant et vers le bas du véhicule, conférée par les trois marches successives 20,21,22, réalisées au niveau du bord longitudinal 17 desdites zones 14. Ainsi, lors d'un choc accidentel de la partie avant 2 d'un véhicule avec un piéton, celui-ci pivote, et sa tête vient souvent impacter l'une des deux zones latérales du capot 3, situées au dessus des zones latérales 14 de la doublure 12 et dont le profil en escalier est incliné vers l'avant et vers le bas du véhicule. Suite à l'impact de la tête contre le capot 3, la tête est alors guidée vers l'avant du véhicule en descendant lesdites marches 20,21,22 évitant d'être dirigée vers l'aile 5, constituant un point dur et donc dangereux pour ledit piéton.

## Revendications

1. Véhicule (1) automobile comprenant un capot avant (3) bordé par deux ailes (5), ledit capot (3) étant muni d'une doublure (12) venant au contact desdites ailes (5), les zones latérales (14) de ladite doublure (12) venant au contact des ailes (5), présentent chacune une inclinaison orientée longitudinalement par rapport au véhicule (1), **caractérisé en ce que** chaque zone latérale (14) de la doublure (12) est surélevée par rapport à chacune des deux ailes (5).

2. Véhicule selon la revendication 1, **caractérisé en ce que** chaque inclinaison s'étend vers l'avant et vers le bas du véhicule.

3. Véhicule selon l'une quelconque des revendications 1 et 2, **caractérisé en ce que** les zones latérales (14) présentant une inclinaison sont situées chacune en partie arrière de doublure (12).

4. Véhicule selon l'une quelconque des revendications 1 à 3, **caractérisé en ce que** la doublure (12) de capot (3) comporte deux rampes latérales et longitudinales présentant une inclinaison.

5. Véhicule selon l'une quelconque des revendications 1 à 4, **caractérisé en ce que** l'inclinaison est progressive et monotone.

6. Véhicule selon l'une quelconque des revendications 1 à 5, **caractérisé en ce que** les zones latérales (14) de la doublure (12) de capot (3) présentent chacune, selon une direction longitudinale du véhicule, une succession de marches (20,21,22), dont la hauteur varie de façon progressive et monotone.

7. Véhicule selon la revendication 6, **caractérisé en ce que** la marche la plus haute (22) est située à la partie arrière de chaque zone latérale (14) de la doublure (12), et la marche la plus basse (20) est située à sa partie avant.

8. Véhicule selon la revendication 7, **caractérisé en ce que** les zones latérales (14) de la doublure (12) de capot (3) présentent chacune, selon une direction longitudinale du véhicule, une succession trois marches (20,21,22).

9. Véhicule selon l'une quelconque des revendications 7 ou 8, **caractérisé en ce que** chaque marche (20,21,22) présente une face supérieure penchée vers l'avant et vers le bas du véhicule.

## Patentansprüche

1. Kraftfahrzeug (1), das eine vordere Haube (3) aufweist, die von zwei Flügeln (5) umgeben ist, wobei die Haube (3) mit einer Innenverkleidung (12) versehen ist, die in Berührung mit den Flügeln (5) kommt, wobei die seitlichen Bereiche (14) der Innenverkleidung (12), die mit den Flügeln (5) in Berührung kommen, jeweils eine Neigung aufweisen, die längs in Bezug auf das Fahrzeug (1) ausgerichtet ist, **dadurch gekennzeichnet, dass** jeder seitliche Bereich (14) der Innenverkleidung (12) in Bezug auf jeden der zwei Flügel (5) überhöht ist.

2. Fahrzeug nach Anspruch 1, **dadurch gekennzeichnet, dass** sich jede Neigung nach vorn und zur Unterseite des Fahrzeugs erstreckt.

3. Fahrzeug nach einem der Ansprüche 1 und 2, **dadurch gekennzeichnet, dass** die seitlichen Bereiche (14), die eine Neigung aufweisen, jeweils im hinteren Teil der Innenverkleidung (12) liegen.

4. Fahrzeug nach einem der Ansprüche 1 bis 3, **dadurch gekennzeichnet, dass** die Innenverkleidung (12) der Haube (3) zwei seitliche und längliche Rampen, die eine Neigung aufweisen, aufweist.

5. Fahrzeug nach einem der Ansprüche 1 bis 4, **dadurch gekennzeichnet, dass** die Neigung allmählich und gleichförmig ist.

6. Fahrzeug nach einem der Ansprüche 1 bis 5, **dadurch gekennzeichnet, dass** die seitlichen Bereiche (14) der Innenverkleidung (12) der Haube (3) jeweils entlang einer Längsrichtung des Fahrzeugs eine Abfolge von Stufen (20, 21, 22), deren Höhe allmählich und gleichförmig variiert, aufweisen.

7. Fahrzeug nach Anspruch 6, **dadurch gekennzeichnet, dass** die höchste Stufe (22) im hinteren Teil jedes seitlichen Bereichs (14) der Innenverkleidung (12) liegt, und die niedrigste Stufe (20) in ihrem vorderen Teil liegt.

8. Fahrzeug nach Anspruch 7, **dadurch gekennzeichnet, dass** die seitlichen Bereiche (14) der Innenverkleidung (12) der Haube (3) jeweils entlang einer Längsrichtung des Fahrzeugs eine Abfolge von drei Stufen (20, 21, 22) aufweisen.

9. Fahrzeug nach einem der Ansprüche 7 oder 8, **dadurch gekennzeichnet, dass** jede Stufe (20, 21, 22) eine obere Seite aufweist, die nach vorn und zur Unterseite des Fahrzeugs geneigt ist.

## Claims

1. A motor vehicle (1) including a front bonnet (3) bordered by two wings (5), said bonnet (3) being provided with a lining (12) coming in contact with said wings (5), the lateral regions (14) of said lining (12) coming in contact with the wings (5), each having an incline oriented longitudinally in relation to the vehicle (1), **characterized in that** each lateral region (14) of the lining (12) is higher than each of the two wings (5).

2. The vehicle according to Claim 1, **characterized in that** each incline extends towards the front and towards the bottom of the vehicle.

3. The vehicle according to any one of Claims 1 and 2, **characterized in that** the lateral regions (14) having an incline are each situated in the rear part of the lining (12).

4. The vehicle according to any one of Claims 1 to 3, **characterized in that** the lining (12) of bonnet (3) comprises two lateral and longitudinal ramps presenting an incline.

5. The vehicle according to any one of Claims 1 to 4, **characterized in that** the incline is progressive and uninterrupted.

6. The vehicle according to any one of Claims 1 to 5, **characterized in that** the lateral regions (14) of the lining (12) of bonnet (3) each have, along a longitudinal direction of the vehicle, a succession of steps (20, 21, 22), the height of which varies in a progressive and uninterrupted manner.

7. The vehicle according to Claim 6, **characterized in that** the highest step (22) is situated at the rear part of each lateral region (14) of the lining (12), and the lowest step (20) is situated at its front part.

8. The vehicle according to Claim 7, **characterized in that** the lateral regions (14) of the lining (12) of bonnet (3) each have, along a longitudinal direction of the vehicle, a succession of three steps (20, 21, 22).

9. The vehicle according to any one of Claims 7 or 8, **characterized in that** each step (20, 21, 22) has an upper face inclined towards the front and towards the bottom of the vehicle.
